# EUROPÄISCHE PATENTANMELDUNG

(11) **EP 1 647 536 A2**
(43) Veröffentlichungstag der Anmeldung: **19.04.2006**
(21) Anmeldenummer: 05022252.0
(22) Anmeldetag: 12.10.2005
(51) Int. Cl.: C04B 28/26, C04B 40/00

(54) **Putzmörtelmischung zur dekorativen oder strukturgebenden Oberflächenbeschichtung und ein Verfahren zu dessen Herstellung**

(30) Priorität: 12.10.2004 DE 102004049776
(71) Anmelder: Fakolith-Farben GmbH, 64658 Fürth (DE)
(72) Erfinder: Farenkopf, Heinz Dieter Uwe, 64658 Fürth (DE)
(74) Vertreter: Behrens, Helmut

(57) **Zusammenfassung**

Die Erfindung betrifft eine Mörtelmischung und ein Herstellungsverfahren zur dekorativen oder strukturgebenden Oberflächenbeschichtung, wobei die Mörtelmischung aus einer herkömmlichen Trockenmischung aus Zement als hydraulischem Bindemittel und körnigen Zuschlagstoften, insbesondere Sand und Marmormehl besteht, die unter Zugabe von Wasser angemischt wird. Die Putzmörtelmischung ist dadurch gekennzeichnet, dass der herkömmlichen Mischung mindestens eine Dispersion aus Wasser, einer Kunststoffdispersion, Wasserglas und Porenbildner beigemischt wird. Dabei wird die aus der Putzmörtelmischung hergestellte dekorative oder strukturgebende Oberflächenbeschichtung durch ein zweischichtiges Herstellungsverfahren modelliert und in einer dritten bearbeitungsstufe noch mit einer Lasur veredelt und zusätzlich geschützt.

## Beschreibung

Die Erfindung betrifft ein Putzmörtelmischung zur dekorativen oder strukturgebenden Oberflächenbeschichtung gemäß dem Oberbegriff des Patentanspruchs 1 sowie ein Verfahren zur Herstellung einer Putzmörtelmischung gemäß dem Oberbegriff des Patentanspruchs 7 und einer dekorativen oder strukturgebenden Oberflächenbeschichtung mit einer Putzmörtelmischung gemäß dem Oberbegriff des Patentanspruchs 11.

Putzmörtel werden je nach Einsatzgebiet mit Zement, Kalk oder Gips gebunden. MiL diesen anorganischen Bindemitteln lassen sich weitgehend alle Anforderungen am Baukörper erfüllen, zudem sind sie in großen Mengen verfügbar und preiswert. Den hydraulischen Bindemitteln Zement, Kalk oder Gips werden noch Zuschlagstoffe wie Sand, Kies, Splitt oder Marmormehl beigegeben und mit Anmachwasser vermischt. Derartige Putzmörtel mit Zement als Bindemittel weisen sehr hohe Festigkeiten auf und werden vorwiegend im Hausbau dort eingesetzt, wo hohe mechanische Beanspruchungen erwartet werden. Das hydraulische Bindemittel Zement erhärtet unter Aufnahme von Wasser und bewirkt eine steinartige Verfestigung. Je nach den Mischungsverhältnissen der Zuschlagstoffe mit den Bindemitteln wird eine mehr oder weniger hohe Festigkeit erzielt. Die Art der Aushärtung bewirkt spröde, wenig elastische Baukörper, wobei an den Zuschlagstoffen wie Sand, Marmormehl und Kies aufgrund bestehender Normen kaum Verbesserungen zulässig sind.

Soll der Mörtel bei der Verarbeitung eine gute Plastizität besitzen, geschmeidig und zusammenhängend sein und das ausgehärtete Material ein homogenes rißfreies Gefüge aufweisen und möglichst in seiner Festigkeit hoch sein und eine hohe Biegezugfestigkeit aufweisen, so werden Putzmörtelmischungen unter Einsatz von Zusatzmitteln entsprechend verbessert. Insbesondere durch den Einsatz einer Kunststoffdispersion als Zusatzmittel ist es bekannt, den Mörtel geschmeidiger zu gestalten, die Haftung auf dem Untergrund zu verbessern und die Verarbeitbarkeit zu erleichtern. Bei besonderen Anforderungen an die Optik und Farbgebung ist es bekannt, den Putzmörtelmischungen Farbpigmente zuzugeben oder die abgebundene Putzmörtelmischung mit bestimmten pigmentierten Dispersionen oder Lasuren zu überziehen.

Zur Erzielung von dekorativen Oberflächen im Innen- und Außenbereich ist aus der DE 203 13 654 Ul eine Putzmörtelmischung auf der Basis von Gips bekannt. Diese Gipsmischung setzt sich zusammen aus den hydraulischen Bindemitteln Gips, Anhydrid und Zement sowie Zuschlagstoffen wie Marmormehl unterschiedlicher Körnung, Bimsmehl, Kalk- und Trassmehl sowie Vermiculite. Dieser Trockenmischung werden in Abhängigkeit der gewünschten monochromen Grundfarbe des Putzes im trockenen Zustand entsprechende Farbpigmente zur Erzielung einer gleichmäßigen Färbung beigegeben. Zur Verarbeitung wird dieser Trockenmischung in üblicher Weise Wasser beigemischt, um eine leicht verarbeitbare plastische Mörtelmischung zu erhalten. Diese wird anschließend mit einer Kelle in Stärken von 1 bis 3 mm auf entsprechenden Oberflächen aufgetragen und geglättet. Zur Erzielung besonderer visueller Effekte insbesondere einer polychromen Oberfläche wird der Putz mittels flach angestellter Kelle mit Unterbrechungen gericben. Nach dem vollständigen Abbinden und Trocknen dieses Putzgemisches kann dieser mit bekannten Lasuren weiter veredelt werden. Eine derartige Putzmischung dürfte wegen dcr Feuchtigkeitsempfindlichkeit durch das Bindemittel Gips im Außenbereich nur eingeschränkt einsetzbar sein. Des weiteren ergibt die Einmischung der Farbpigmente in die Trockenmischung eine später kaum veränderbare farbliche Ausbildung, die lediglich noch durch überdeckende Farbanstriche korrigierbar ist. Des weiteren eignen sich derartige Mörtelmischungen offensichtlich nur für Auftragstärken von 1 bis 3 mm, so dass auch die Modulierfähigkeit eingeschränkt ist.

Aus der DE 197 20 320 Al ist ein Effektboden bestehend aus einem 3 Schicht-Verfahren bekannt. Das Verfahren ist dadurch gekennzeichnet, dass eine Grundschicht aus einer selbstverlaufenden feuchtigkeitshärtenden Zementmasse mit einem Kunststoffanteil von mehr als 10 Gew.%, bezogen auf die trockene Ausgangsmasse, in einer Schicht von 2 bis 10 mm aufgebracht wird, diese Grundschicht, in noch nicht abgebundenem Zustand miL einer Effektmasse abgestreut, nach dem Abbinden der Grundschicht nicht eingebundene Teilchen der Effektmasse entfernt, und noch vor dem völligen Aushärten der Grundschicht eine Kunstharz-Deckschicht aufgebracht wird. Der so erstellte Belag eignet sich offensichtlich nur für eine Fußbodenbeschichtung, da nur hier eine selbstverlaufende Zementmasse nützlich ist. Die selbstverlaufende Zementmasse schließt alle strukturgebenden Maßnahmen. Eine Modellierbarkeil ist auch durch die Effektmasse oder den Kunstharz-Deckanstrich nicht möglich. Mit einer Auftragsschicht von 2 bis 10 mm lassen sich nur geringe oder gar keine Strukturierungen der Oberfläche erzielen. Eine filmbildende Deckschicht erhöht zwar die Abriebfestigkeit, schließt aber auch alle Poren zu einer einheitlich glatten Oberfläche.

Zur Erzielung von farbig pigmentierten Wandbelägen ist aus der DE-AS 1222413 ein Verfahren bekannt, das aus einer Grundierung mit Kautschuklatex und einer emulsionsartigen Masse besteht.

Diese ist dadurch gekennzcichnet, dass nach dem Auftragen der Deckbeschichtung durch Einbringung verschiedenfarbiger Farbpigmente in die noch feuchte Deckbeschichtung und glätten mit einer Glättkclle oder planschleifen marmorähnliche, vollkommen glatte, glasähnliche Oberflächen entstehen. Der so erstellte Wandbelag kann je nach enthaltener Körnung der Farbpigmente von glatt bis zu einer 1 bis 2 cm starken Struktur eines Kratzputzes ausgebildet werden. Die so entstandene Struktur ist auf einen Schwund der Beschichtung und dcm Heraustreten der groben Pigmente zurück zu führen, nicht aber auf ein Strukturieren einer plastischen Masse. Die Farbgebung erfolgt ausschließlich durch die eingedrückten Farbpigmente, nicht durch eine individuell gestaltbare steinähnliche Farblasur.

Der Erfindung liegt deshalb die Aufgabe zugrunde, eine Mörtelmischung der eingangs genannten Art so zu verbessern, dass sie mit einer hohen Auftragsstärke und einer langen Modulierfähigkeit aufgetragen werden kann und mit ihr eine Vielzahl dekorativer und struktureller Oberflächen mit natürlichem Aussehen nachbildbar ist.

Diese Aufgabe wird durch die in Patentanspruch 1 und 7 angegebene Erfindung gelöst. Weiterbildungen und vorteilhafte Ausführungsbeispiele sind in den Unteransprüchen angegeben.

Die Erfindung hat den Vorteil, dass durch die Mischung einer Mörteltrockenmasse mit Wasser und einer Silikat-Dispersion eine hohe Auftragsstärke von bis zu 12 cm in einem Arbeitsgang erreichbar ist. Durch diese Zuschlagstoffe ist vorteilhafterweise auch eine lange Modellierfähigkeit bis zu 12 Stunden möglich, so dass auch schwierige Oberflächen mit spezieller dekorativer Wirkung modelliert werden können. Insbesondere wird durch die in der Dispersion enthaltenen Zuschläge eine außerordentliche Hait- und Standfestigkeit erreicht, wobei auch nach Ablauf der chemischen Reaktion durch diese Zusätze die Endhärte sich noch erhöht, wobei die Neigung zur Rissbildungen vermieden wird.

Die Erfindung hat zusätzlich den Vorteil, dass die in der erfindungsgemäßen Dispersion enthaltenen Zuschlagstoffe ein bestimmtes Masse-Poren-Volumen erzeugen, so dass auch nach der chemischen Reaktion der Abbindung noch eine längere mechanische Bearbeitungsmöglichkeit gegeben ist, durch die ohne großen Kraftaufwand mit einfachen Hilfsmitteln verschiedene Strukturen in den angetrockneton Mörtel eingearbeitet werden können, die ihm vorzugsweise die gewünschten natursteinähnlichen Oberflächen verleihen. Dadurch sind insbesondere rustikale Steinoberflächen erzielbar. Dadurch sind insbesondere glatte, rustikale Stein-, Holz- oder Fliesenähnliche Oberflächen erzielbar, die sich besonders gut für Renovierungen im Innen- und Außenbereich verschiedenster Bauwerke eignen. Insbesondere sind damit auch ältere Fassaden und Kunstwerke sowie Aufbauten in Filmstudios oder Theaterbühnenbilder nachbildbar und unter Denkmalschutz stehende Bauten naturgetreu restaurierbar.

Bei einer besonderen Ausbildung der Erfindung ist vorgesehen, einer herkömmlichen Trockenmörtelmasse je nach nachbildbarer Oberfläche und mechanischer Anforderungen unterschiedliche Dispersionen mit verschiedenen Zuschlagmitteln zuzugeben, wodurch vorteilhafterweise unterschiedliche Auftragsshärken, oder höhere Elastizitätswerte und/oder ein besserer Schutz vor Nässe, Säuren und Laugen erreichbar ist.

Insbesondere hat das Herstellungsverfahren zur dekorativen oder strukturgebenden Oberflächenbeschichtung durch ein mehrstufiges Verfahren den Vorteil, dass nach dem ersten Verfahrensschritt bereits sehr gut modellierbare Oberflächen erreichbar sind, und der zweite Verfahrensschritt den Vorteil aufweist, dass diese Oberflächen noch bis zu 12 Stunden mit mechanischen einfachsten Werkzeugen strukturierbar sind und der dritte Verfahrensschritt den Vorteil aufweist, dass durch die Auftragung einer zusätzlichen Lasur spezielle optische und farbliche Naturstein- oder Alterungsnachbildungen erzielbar sind und gleichzeitig der Oberflächenschutz noch verbessert wird.

Die erfindungsgemäße Putzmörtelmischung besteht im wesentlichen aus einer herkömmlichen Trockenmasse ohne spezielle Zuschlagstoffe wie sie aus dem Stand der Technik bekannt ist. Diese Trockenmasse besteht vorzugsweise aus den Grundstoffen wie Sand, Marmormehl und Zement. Dazu wird eine Dosierung von einem Teil weißem oder grauem Zement vorgeschlagen, die mit fünf Teilen Zuschlagstoffen aus Sand und/oder Marmormehl vermischt ist. Dabei können die Zuschlagstoffe in den vorkommenden Sand- oder Marmorfarben je nach ausbildbarer Oberflächenoptik oder nach dem gewünschten Natur- oder Kunststeintyp ausgewählt werden. Vorzugsweise werden als Zuschlagstoffe natürliche, körnige Materialien mit kalkartiger Zusammensetzung verwandt. Diese werden durch Zerkleinern von Gestein hergestellt und bestehen dann aus vieleckigen oder abgerundeten Körnern bis etwa 2 mm Durchmesser. Je nach Anwendungszweck kann der Feinkornanteil höher oder niedriger gewählt werden. Diese Trockenmischung wird vorzugsweise in Gebinden von 25 kg sackweise geliefert.

Zur Nachbildung einer Vielzahl von dekorativen und strukturgebenden Oberflächen ist erfindungsgemäß ein dreistufiges System zur Herstellung dieser Oberflächen mit der Mörtelmischung vorgesehen. Dazu können vorzugsweise viele Arten von Natursteinen nachgebildet werden. Aufgrund dieses dreistufigen Herstellungsverfahrens sind aber auch glatte, rustikale Stein- und Ziegelarten und deren Strukturen nachbildbar.

In der ersten Stufe zur Herstellung der Putzmörtelmischung wird eine herkömmliche 25 kg Trockenmörtelmasse ohne Zusatzmittel mit einer Wassermenge von 15 bis 18 % angerührt. Dieser plastischen Masse wird eine Dispersion von 750 ml oder ca. 3 % bezogen auf die Trockenmasse als mindestens erste Dispersion zugegeben. Dabei enthält eine erste Grunddispersionsmasse 20-75 % Wasser, 5-50 % Kunstharzdispersion, 10-70 % Wasserglas und bis zu 10 % Porenbildner. Dabei sollten bei minimalen Anforderungen an den Feuchtigkeitsschutz und der Verhinderung einer Rissbildung mindestens 5 % Kunststoffdispersion und bei maximalen Anforderungen höchstens 50 % vorgesehen werden. Das Wasserglas verkieselt mit dem Mörtel zu einem chemisch untrennbaren Bestandteil und bildet so eine Verfestigung und Wetterbeständigkeit. Bei der Verarbeitung findet zunächst eine physikalische Trocknung statt, wodurch das Wasser verdunstet. Bei der Mischung wird der Anteil des Wasserglas hauptsächlich nach der angestrebten Modellierbarkeit festgelegt, wobei mindestens 10 % und höchstens 70 % Wasserglas vorzusehen sind.

Je nach der gewünschten Porosität werden höchstens 10 % des Porenbildners der Dispersion zugegeben. Der Wassergehalt der Dispersion richtet sich nach der gewünschten Viskosität und Vermischbarkeit in der bereits hergestellten Mörtelmasse. Dabei sollten in der Dispersion mindestens 20 % und höchstens 75 % Wasser enthalten sein, um eine gute Verarbeitung zu gewährleisten.

Diese plastische Putzmörtelmischung wird dann auf die gewünschte Oberfläche in einer oder mehreren Schichten bis zur gewünschten Schichtdichte manuell oder maschinell aufgetragen. Dabei sind insgesamt Schichtdicken bis 12 cm in einem Arbeitsgang auftragbar und noch gut modellierbar. Die so modellierten Oberflächen können nach der Antrocknung des Mörtels in einer zweiten Bearbeitungsstufe noch ca. 12 Stunden mit mechanischen Hilfsmitteln nachmodelliert werden. Dazu können beispielsweise Bürsten, Metallkämme, Fugenmesser, Spachtel und Schwämme verwandt werden, durch die der noch nicht voll ausgehärteten Oberfläche eine gewünschte Struktur aufgeprägt wird. Trotz der leichten Bearbeitbarkeit ist eine außerordentliche Haft- und Standfestigkeit auch bei Schichten bis 12 cm ein wesentliches Merkmal dieses erfinderischen Mörtelgemischs. Nach Ablauf der chemischen Reaktion wird die Endhärte durch die Zusätze in der Dispersion noch erhöht und die Neigung zu einer Rissbildung vermieden. Die chemische Reaktion verhindert dabei nicht die physikalische Trocknung der weiteren Bindemittel wie das hydraulische Abbinden des Zements.

Nach der Aushärtung dieser zweiten Verarbeitungsstufe kann innerhalb von 1 bis 30 Tagen die Oberfläche mittels einer dritten Bearbeitungsstufe optisch verfeinert werden. Dazu wird die modellierte vorzugsweise hellgrau auftrocknende Oberfläche zusätzlich noch mit einer transparenten oder einer Farblasur ein- oder mehrmalig überzogen. Diese transparente Lasur kann mit Oxydpigmenten in beliebiger Farbtonvielfalt hergestellt werden. Dabei enthält die Lasur 10 - 90 % Wasser, 5 - 50 % Kunstharzdispersion, 5-50 % Wasserglas und je nach Farbwunsch bis zu 5 % Oxydfarbpigmenten.

Je nach dem gewünschten Oberflächenschutz wird mindestens ein Dispersionsgehalt von 5 % und höchstens von 50 % vorgesehen. Diese Lasur wird unterschiedlich vom Mörtel aufgenommen. Durch die Reaktion des Zementgrundes mit der Silikatlasur entsteht eine gewünschte steinechte Farbgebung. Erst durch die Lasur mit seinen Silikatanteilen erhält der Mörtel seine Endhärte und seinen Oberflächenschutz.

Zusätzlich kann die Oberfläche in stark bewitterten Fällen noch mit einer Hydrophobierung auf Silan/Siloxan-Basis vor Feuchtigkeit geschützt werden. Im Unterwasserbereich ist in jedem Fall ein Schutzanstrich mit einer mit Acrylatverdicker hergestellten Lasur erforderlich.

Durch dieses erfindungsgemäße dreistufige Herstellungsverfahren von dekorativen oder strukturgebenden Oberflächenbeschichtungen mit einer erfindungsgemäßen Putzmörtelmischung stehen vielseitige Oberflächennachbildungen zur Verfügung, die in problematischen Bereichen den unterschiedlichen funktionellen und dekorativen Anforderungen genügen und an die Eigenschaft und Optik von Natur oder Kunststcinen angepasst werden kann.

Bei einer besonderen Anforderung an eine höhere Elastizität und Schutz vor Nässe, Säuren und Laugen wird die Beimischung einer zweiten abgewandelten Dispersion vorgeschlagen. Dabei enthält diese zweite Dispersion 10-50 % Wasser, 10 - 75 % Kunstharzdispersion, 15 - 50 % Polyurethan-Dispersion und bis zu 10 % Porenbildner. Die verwendete Polyurethan-Dispersion ist ein hochwertiges Bindemittel für mineralische Untergründe, flexibel und hochbeständig gegen Abrieb, Feuchtigkeit und die meisten Chemikalien. Je nach den Anforderungen der Bindewirkung, Flexibilität, Abriebbeständigkeit und Schutz gegen Feuchtigkeit sollte der Polyurethananteil mindestens 15 % und höchstens 50 % betragen.

Diese zweite Dispersion wird dem Trockenmörtel ebenfalls während der ersten Verarbeitungsstufe beigemischt. Dabei ist eine Mischung erreichbar, die eine Topfzeit von ca. 2 Stunden besitzt. Dabei wird diese zweite Dispersion im Grunde als Ersatz der ersten Dispersion vorgesehen und wird ebenfalls in einem Mischungsverhältnis von 750 ml zu 25 kg Trockenmörtel dieser beigemischt. Je nach gewünschter Elastizität und Schutz vor Nässe, Säuren und Laugen können die erste und zweite Dispersion in gleichen oder unterschiedlichen Anteilen der Grundmörtelmasse unter Beibehaltung des Mischungsverhältnisses von 750 ml zu 2b kg Trockcnmörtel (ca. 3 %) beigemischt werden.

## Patentansprüche

1. Putzmörtelmischung zur dekorativen oder strukturgebenden Oberflächenbeschichtung bestehend aus einer Trockenmischung aus einem Zement als hydraulischem Bindemittel und körnigen Zuschlagstoffen, insbesondere Sande, Marmormehl, Kies und Splitt, die unter Zugabe von Wasser vermischt wird, **dadurch gekennzeichnet, dass** der Mischung mindestens eine Dispersion beigemischt wird, die Wasser, eine Kunstharzdispersion, Wasserglas und Porenbildner enthält.

2. Putzmörtelmischung nach Anspruch 1, **dadurch gekennzeichnet, dass** die Trockenmischung aus zwei Teilen weißem oder grauem Zement besteht, dem fünf Teile Zuschlagstoffe aus Sand und/oder Marmormehl beigemischt sind, wobei die körnigen vieleckigen und abgerundeten Zuschlagstoffe Korngrößen bis 2 mm Durchmesser aufweisen, die mit einer Wassermenge von 13 bis 18 % und einer Dispersionsmenge von ca. 3 % zu einer plastischen Mörtelmischung angerührt wird.

3. Putzmörtelmischung nach Anspruch 1 oder 2, **dadurch gekennzeichnet, dass** eine erste Dispersion vorgesehen ist, die 20 bis 75 % Wasser, 5 bis 50 % Kunstharzdispersion, 10 bis 70 % Wasserglas und bis zu 10 % Porenbildner enthält.

4. Putzmörtelmischung nach Anspruch 1 oder 2, **dadurch gekennzeichnet, dass** eine zweite Dispersion vorgesehen ist, die 10 bis 50 % Wasser, 10 bis 75 % Kunstharzdispersion, 15 bis 50 % Polyurethan-Dispersion und bis zu 10 % Porenbildner enthält.

5. Putzmörtelmischung nach Anspruch 1 bis 4, **dadurch gekennzeichnet, dass** der Mischung eine erste und/oder eine zweite Dispersion beigemischt wird.

6. Putzmörtelmischung nach einem der vorhergehenden Ansprüche, **dadurch gekennzeichnet, dass** auf der getrockneten Mörtelmischung aus Trockenmasse, Wasser und einer ersten und/oder zweiten Dispersion eine Lasur aufgetragen wird, die aus 10 bis 90 % Wasser, 5 bis 50 % Kunstharzdispersion und 5 bis 50 % Wasserglas und/oder bis 5 % Oxydfarbpigmente enthält.

7. Verfahren zur Herstellung einer Putzmörtelmischung zur Herstellung von dekorativen oder strukturgebenden Oberflächenbeschichtungen nach einem der Ansprüche 1 bis 4, das zunächst durch Zugabe von Zement und körnigen Zuschlagstotien, insbesondere Sande, Marmormehl, Kies und Split, eine Trockenmischung hergestellt wird, die unter Zugabe von Wasser zu einer plastischen Mörtelmischung vermischt wird, **dadurch gekennzeichnet, dass** der plastischen Mörtelmischung mindestens eine Dispersion aus Wasser, einer Kunstharzdispersion, Wasserglas und Porenbildner beigemischt wird.

8. Verfahren nach Anspruch 7, **dadurch gekennzeichnet, dass** der plastischen Mischung als Dispersion mindestens eine erste Dispersion beigemischt wird, die 20 - 75 % Wasser, 5 - 50 % Kunstharzdispersion, 10 bis 70 % Wasserglas und bis zu 10 % Porenbildner enthält.

9. Verfahren nach Anspruch 7 oder 8, **dadurch gekennzeichnet, dass** der plastischen Mörtelmischung als Dispersion eine zweite Dispersion beigemischt wird, die 10 - 50 % Wasser, 10 bis 75 % Kunstharzdispersion, 15 bis 50 % Polyurethan-Dispersion und bis zu 10 % Porenbildner enthält.

10. Verfahren nach einem der vorhergehenden Ansprüche 7 bis 9, **dadurch gekennzeichnet, dass** der plastischen Mörtelmischung eine erste und/oder eine zweite Dispersion beigemischt wird.

11. Herstellungsverfahren zur dekorativen oder strukturgebenden Oberflächenbeschichtung mit einer Putzmörtelmischung nach einem der Ansprüche 1 bis 4, **dadurch gekennzeichnet, dass** die plastische Mörtelmischung aus Trockenmasse, Wasser und einer ersten und/oder zweiten Dispersion in einer ersten Verarbeitungsstufe in einer oder mehreren Schichten bis zu 12 cm als Oberflächenbeschichtung auf eine gewünschte Oberfläche oder Konstruktion aufgetragen und innerhalb einer Verarbeitungszeit bis zu 12 Stunden zu einer dekorierten und/oder strukturierten Oberfläche manuell oder maschinell modelliert wird.

12. Herstellungsverfahren nach Anspruch 5, **dadurch gekennzeichnet, dass** die zu einer Oberflächenbeschichtung angetrocknete Mörtelmischung in einer zweiten Verarbeitungsstufe innerhalb eines Verarbeitungszeitraums bis zu 12 Stunden mit manuellen Hilfsmitteln zu einer strukturierten Oberfläche modelliert wird.

13. Herstellungsverfahren nach Anspruch 5 oder 6, **dadurch gekennzeichnet, dass** in einer dritten Verarbeitungsstufe die zu einer gewünschten Oberfläche ausgehärtete Mörtelmischung innerhalb eines Zeitraums von 1 bis 30 Tagen mit einer transparenten oder einer Farblasur einodcr mehrmalig überzogen wird, um den optischen Eindruck einer Naturstein ähnlichen Oberfläche zu erzielen und diese gleichzeitig langfristig vor Umwelteinflüssen und Abricb zu schützen.
